Europäisches Patentamt

European Patent Office

Office européen des brevets

(11) Veröffentlichungsnummer: **0 230 914**
**A2**

(12) # EUROPÄISCHE PATENTANMELDUNG

(21) Anmeldenummer: **87100436.2**

(22) Anmeldetag: **15.01.87**

(51) Int. Cl.4: **C08L 69/00** ,
//(C08L69/00,67:02,51:00,25:02,-
33:04,35:00)

(30) Priorität: **20.01.86 DE 3601423**

(43) Veröffentlichungstag der Anmeldung:
**05.08.87 Patentblatt 87/32**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Mitulla, Konrad, Dr.**
**Schwalbenweg 31**
**D-6700 Ludwigshafen(DE)**
Erfinder: **Hambrecht, Jürgen, Dr.**
**Am Klosterwald 31**
**D-4400 Münster-Hiltrup(DE)**
Erfinder: **Seiler, Erhard, Dr.**
**Erpolzheimer Strasse 1**
**D-6700 Ludwigshafen(DE)**
Erfinder: **Heinz, Gerhard, Dr.**
**Im Vogelsang 2**
**D-6719 Weisenheim(DE)**
Erfinder: **Wassmuth, Georg, Dr.**
**Von-Sturmfelder-Strasse 60**
**D-6700 Ludwigshafen(DE)**
Erfinder: **Siebel, Hans Peter, Dr.**
**Trifelsring 20**
**D-6703 Limburgerhof(DE)**

(54) **Schlagzähe thermoplastische Formmasse und deren Verwendung.**

(57) Die Erfindung betrifft eine thermoplastische Formmasse enthaltend,

A 25 bis 60 Gew.% mindestens eines Polycarbonates
B 5 bis 40 Gew.% mindestens eines Polyalkylenterephthalates und
C 2 bis 30 Gew.% mindestens eines Pfropfkautschuks auf Basis von Polybutadien-oder Polyalkylacrylestern mit 1 bis 8 C-Atomen im Alkylrest oder Mischpolmerisaten davon als Elastomeren, sowie

D 5 bis 30 Gew.% mindestens eines Copolymeren, das einpolymerisiert enthält, bezogen auf D,
$d_1$) 10 bis 90 Gew.% eines vinylaromatischen Monomeren aus der Gruppe von Styrol, $\alpha$-Methylstyrol oder p-Methylstyrol oder Gemischen davon und
$d_2$) 90 bis 10 Gew.% eines ethylenisch ungesättigten Monomeren aus der Gruppe von (Meth)-acrylsäure, (Meth)acrylsäurealkylestern mit 1 bis 8 C-Atomen im Alkylrest, (Meth)acrylnitril, Maleinsäureanhydrid, Maleinimid, N-Alkyl(Aryl)maleinimid oder Glycidylmethacrylat oder Gemischen davon.

EP 0 230 914 A2

Die Formmasse wird zur Herstellung von Formteilen verwendet.

## Schlagzähe thermoplastische Formmasse und deren Verwendung

Die Erfindung betrifft eine schlagzähe thermoplastische Formmasse enthaltend

A 25 bis 60 Gew.% eines Polycarbonates

B 5 bis 40 Gew.% eines Polyalkylenterephthalates und

C 2 bis 30 Gew.% eines Pfropfkautschuks auf Basis von Polybutadien-oder Polyalkylacrylestern mit 1 bis 8C-Atomen im Alkylrest oder Mischpolmerisaten davon als Elastomeren.

Zum Stand der Technik nennen wir

EP-PS 01 06 027

In dieser Schrift sind Mischungen beschrieben, die aus Polycarbonat, einem Ethlencopolymeren, einem Polyester und einem Pfropfkautschuk bestehen.

Insbesondere genügt bei diesen Formmassen die Zähigkeit und Wärmeformbeständigkeit nicht den ständig steigenden Ansprüchen; insbesondere ist die Verarbeitbarkeit und die Chemikalienbeständigkeit der bekannten Formmasse unbefriedigend.

Aufgabe der vorliegenden Erfindung war es deshalb, Formmassen auf Basis von Polymermischungen zu entwickeln, die diese Nachteile nicht aufweisen. Insbesondere sollte die Chemikalienbeständigkeit verbessert werden.

Diese Aufgabe wird durch die im Anspruch 1 beschriebene Formmasse gelöst.

Die Erfindung betrifft daher eine schlagzähe thermoplastische Formmasse enthaltend, jeweils bezogen auf die Komponenten A, B, C + D,

A 25 bis 60 Gew.% mindestens eines Polycarbonates

B 5 bis 40 Gew.% mindestens eines Polyalkylenterephthalates,

C 2 bis 30 Gew.% mindestens eines Pfropfkautschuks auf Basis von Polybutadien-oder Polyalkylacrylestern mit 1 bis 8 C-Atomen im Alkylrest oder Mischpolymerisaten davon als Elastomeren, dadurch gekennzeichnet, daß die Formmasse ferner als Komponente

D 5 bis 30 Gew.% mindestens eines Copolymeren aufweist, das einpolymerisiert enthält, bezogen auf D,

$d_1$) 10 bis 90 Gew.% mindestens eines vinylaromatischen Monomeren aus der Gruppe von Styrol, $\alpha$-Methylstyrol oder p-Methylstyrol oder Gemischen davon und

$d_2$) 90 bis 10 Gew.% mindestens eines ethylenisch ungesättigten Monomeren aus der Gruppe von - (Meth)acrylsäure, (Meth)acrylsäurealkylestern mit 1 bis 8 C-Atomen im Alkylrest, (Meth)acrylnitril, Maleinsäureanhydrid, Maleinimid, N-Alkyl(Aryl)maleinimid oder Glycidylmethacrylat oder Gemischen davon.

Nachstehend wird der Aufbau der erfindungsgemäßen Formmasse aus den Komponenten, die Herstellung der Komponenten und der Formmasse beschrieben.

Die erfindungsgemäße Formmasse enthält die Komponente A bis D, vorzugsweise besteht sie aus diesen. Zusätzlich kann die Formmasse noch die Komponenten E, F und G aufweisen.

Die Formmasse enthält (besteht vorzugsweise), jeweils bezogen auf A, B, C und D, folgende Anteile:

A 25 bis 60 Gew.%, vorzugsweise 30 bis 55 Gew.%,

B 5 bis 40 Gew.%, vorzugsweise 5 bis 30 Gew.%,

C 2 bis 30 Gew.%, vorzugsweise 5 bis 25 Gew.%,

D 5 bis 30 Gew.%, vorzugsweise 10 bis 25 Gew.%.

Bezogen auf 100 Gew.-Teile der Formmasse aus A, B, C + D, können noch zugegen sein

E 0 bis 30 Gew.-Teile, vorzugsweise 2 bis 20 Gew.-Teile

F 0 bis 20 Gew.-Teile, vorzugsweise 2 bis 15 Gew.-Teile und

G 0 bis 40 Gew.-Teile, vorzugsweise 5 bis 35 Gew.-Teile.

Komponente A

Die Polycarbonate (Komponente A) sind an sich bekannt.

Unter Polycarbonaten A im Sinne der erfindungsgemäßen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physiks auf Polycarbonates, Intersience Publishers, New York, 1964, in der US-PS 2 999 835 und in der DE-OS 22 48 817 beschrieben sind. Besonders bevorzugt sind Polycarbonate auf der Basis von 2,2-Bis(-4-hydroxyphenyl)propan. Die Synthese der Polycarbonate wird beispielsweise in der US-PS 2 999 835 und der GB-PS 772 627 beschrieben. Die Komponente A weist relative Viskositäten $\eta_{spec}/c$ im Bereich von 1,1 bis 1,5 [ml/g] auf, entsprechend mittleren Molgewichten $\overline{M}_w$ im Bereich von 25.000 bis 200.000.

Komponente B

Die Polyester gemäß der Erfindung (Komponente B) sind an sich bekannt. Sie besitzen Ketteneinheiten, die einen gegebenenfalls substituierten aromatischen Ring in der Hauptkette enthalten. Beispiele für derartige Substituenten des aromatischen Rings sind Halogene, wie z.B. Chlor, Brom und $C_{1-4}$-Alkylgruppen, wie z.B. Methyl-, Ethyl-, Propyl-und Butylgruppen. Die Polyester werden beispielsweise hergestellt durch Reaktion der entsprechenden aromatischen Dicarbonsäuren, deren Ester oder anderer esterbildender Derivate mit Dihydroxiverbindungen in an sich bekannter Weise. Verwendbare Dihydroxiverbindungen sind beispielsweise Glykole mit $C_2$-$C_6$, besonders Ethylenglykol, 1,4-Butandiol, 1,4-Butendiol und 1,6-Hexandiol; ebenso können 1,4-Hexandiol, 1,4-Cyclohexandiol, 1,4-Bis-(hydroximethyl)-cyclohexan, Bisphenol A, Neopentylglykol, esterbildende Derivate davon und ebenso Mischungen eingesetzt werden.

Die aromatischen Dicarbonsäuren sind beispielsweise Naphthalindicarbonsäure, Terephthalsäure, Isophthalsäure, esterbildende Derivate und Mischungen davon.

In den Polyestern können die aromatischen Dicarbonsäuren teilweise durch andere Dicarbonsäuren ersetzt sein. Als Modifizierungsmittel kommen gegebenenfalls aliphatische und cycloaliphatische Dicarbonsäuren in Frage, wie z.B. Adipinsäure, Azelainsäure, Sebazinsäure, Dodecandisäure und Cyclohexandicarbonsäure.

Bevorzugte Polyester sind Polyalkylenterephthalate mit einer $C_2$-$C_6$-Diol-Komponente, wie Polyethylenterephthalat und insbesondere Polybutylenterephthalat.

Die Polyester (Komponente B) sind charakterisiert durch eine relative Viskosität von 1,2 bis 1,8, gemessen in einer 0,5 %igen Lösung in einem Phenol-/o-Dichlorbenzolgemisch von 3:2 Gewichtsteilen bei 25°C.

Komponente C

Die Komponente C (Pfropfmischpolymerisat) der erfindungsgemäßen Formmasse ist in den Komponenten A un B sowie der nachfolgend beschriebenen Komponente D dispergiert in Form von unimodalverteilten Teilchen im Größenbereich von 50 bis 200 nm oder in Form von multimodalverteilten Teilchen im Bereich von 50 bis 700 nm.

Die Komponente C besteht aus einem Elastomeren $c_i$), das eine Einfriertemperatur von weniger als 0°C, vorzugsweise von weniger als -20°C, aufweist. Dieses Elastomer ist aus Homopolymerisaten aus der Gruppe der Alkylacrylate mit 1 bis 8 C-Atomen im Alkylrest und/oder Homo-und/oder Copolymerisaten konjugiuerter Diene mit 4 bis 5 C-Atomen, insbesondere 1,3-Butadien und Isopren aufgebaut. Insbesondere handelt es sich um Polybutadien und/oder Polybutylacrylat als Elastomeres. Die Herstellung der einzusetzenden Komponente C kann beispielsweise nach der in der DE-PS 12 60 135 beschriebenen Methode erfolgen. Dazu wird zunächst das Elastomer $c_i$) hergestellt, auf das dann in bekannter Weise gepfropft wird.

Herstellung des Elastomeren $c_1$)

Das Elatomer, die Pfropfgrundlage $c_1$), wird hergestellt indem das Alkylacrylat oder das konjugierte Dien allein oder gegebenenfalls zusammen mit dem weiteren Comonomeren, in wäßriger Emulsion in bekannter Weise polymerisiert werden (O.Z. 37071, 37072).

Herstellung der Pfropfhülle $c_2$)

Die Pfropfhülle $c_2$), kann gegebenenfalls mehrstufig aufgebaut sein und wird in der genannten Reihenfolge durch die Zugabe von Monomeren $c_{21}$), dann $c_{22}$ und schließlich $c_{23}$) auf das Elastomere an-oder aufpolymerisiert. Die Summe der einpolymerisierten Monomeren $c_{21}$) + $c_{23}$) beträgt 100. Die 1. Stufe macht gegebenenfalls 0 bis 40 Gew.%, vorzugsweise 10 bis 25 Gew.%, bezogen auf $c_2$), aus. Zu ihrer Herstellung werden nur ethylenisch-ungesättigte aromatische Kohlenwasserstoffe mit bis zu 12 C-Atomen $c_{21}$) verwendet.

Die 2. Stufe der Pfropfhülle macht 15 bis 100 Gew.%, insbesondere 20 bis 45 Gew.%, jeweils bezogen auf $c_2$), aus. Zu ihrer Herstellung werden Mischungen aus den genannten aromatischen Kohlenwasserstoffen und ethylenisch ungesättigten Monomeren im Gewichtsverhältnis von 90:10 bis 60:40, insbesondere von 80:20 bis 70:20 angewendet.

Die 3. Stufe der Pfropfhülle $c_{23}$) macht gegebenenfalls 0 bis 45 Gew.-%, vorzugsweise 5 bis 40 Gew.%, jeweils bezogen auf $c_2$), aus. Zu ihrer Herstellung wird mindestens 1 Monomeres $c_{23}$) aus der Gruppe der Alkylmethacrylate oder der Alkylacrylate mit jeweils 1 bis 8 C-Atomen im Alkylrest einpolymerisiert.

Zur Herstellung der Pfropfhülle $c_2$) und damit der Weichkomponente C wird in Gegenwart des Latex des vernetzten Acrylester-Polymerisats $c_1$) zuerst mindestens ein vinylaromatisches Monomeres $c_{2a_1}$) mit bis zu 12 Kohlenstoffatomen (ein-) bzw. aufpolymerisiert. Beispiele für solche Monomere sind Styrol, $\alpha$-Methylstyrol und kernalkylierte Styrole, wie p-Methylstyrol und tert.-Butylstyrol. Besonders bevorzugt werden Styrol, $\alpha$-Methylstyrol und p-Methylstyrol eingesetzt. Es ist vorteilhaft, diese Pfropfmischpolymerisation von z.B. Styrol $c_{21}$) auf das als Pfropfgrundlage dienende vernetzte Kautschuk-Polymerisat $c_1$) in wäßriger Emulsion unter den üblichen, vorstehend aufgeführten Bedingungen bis zum praktisch vollständigen Verbrauch der Monomeren $c_{21}$) durchzuführen. Die Pfropfmischpolymerisation kann zweckmäßig im gleichen System erfolgen wie die Emulsionspolymerisation zur Herstellung der Pfropfgrundlage $c_1$), wobei, falls notwendig, weiterer Emulgator und Initiator zugegeben werden kann. Das aufzupfropfende vinylaromatische Monomere, insbesondere Styrol kann dem Reaktionsgemisch auf einmal, absatzweise in mehreren Stufen oder vorzugsweise kontinuierlich während der Polymerisation zugegeben werden.

In einer zweiten Verfahrensstufe wird da die Pfropfmischpolymerisation mit einem Monomerengemisch aus einem vinylaromatischen Monomeren und einem copolymerisierbaren polaren Monomeren $c_{22}$) wieder bis zum praktisch vollständigen Umsatz durchgeführt. Dabei werden bevorzugt die bereits bei der ersten Pfropfstufe eingesetzten Monomeren, insbesondere Styrol, $\alpha$-Methylstyrol und p-Methylstyrol verwendet. Beispiele für copolymerisierbare, ethylenisch ungesättigte Monomere sind Acrylnitril, Methylmethacrylat, Acrylamid und/oder Vinylmethylether. Besonders bevorzugt wird Acrylnitril und Methylmethacrylat. Als besonders bevorzugte Monomeren-Gemische werden vor allem Styrol und Acrylnitril, $\alpha$-Methylstyrol und/oder Styrol und Methylmethacrylat eingesetzt. Auch der zweite Schritt der Pfropfmischpolymerisation wird zweckmäßigerweise im gleichen Emulsions-System durchgeführt, dabei kann, falls notwendig, weiterer Emulgator und Inititator zugegeben werden. Das aufzupfropfende Monomeren-Gemisch, bevorzugt wird eine Mischung aus Styrol und MMA oder Styrol und Acrylnitril, kann dem Reaktionsgemisch auf einmal, absatzweise in mehreren Stufen oder vorzugsweise kontinuierlich während der Polymerisation zugegeben werden.

In der 3. Verfahrensstufe werden, gegebenenfalls mit dem Emulgator-und Initiatorsystem, das in der vorangegangenen Verfahrensstufe verwendet wurde, Carboxylgruppen oder Carboxylgruppenderivate enthaltende Monomere, vorzugsweise Acrylsäure, Methacrylsäure, Methylmethacrylat und/oder Glycidylmethacrylat, $c_{23}$) ein-bzw. aufpolymerisiert.

## Komponente D

Die in der erfindungsgemäßen Formmasse enthaltende Komponente D ist eine Hartkomponente aus einem oder mehreren Copolymerisaten, dabei handelt es sich um Styrol/Acrylnitril-Copolymerisat, ein α-Methylstyrol/Acrylnitril-Copolymerisat, ein α-Methylstyrol/Styrol/Acrylnitrilcopolymerisat, ein Styrol/(Meth)-acrylsäurecopolymerisat, ein Styrol/Methylmethacrylsäurecopolymerisat, ein Styrol/Maleinsäureanhydridcopolymerisat, ein Styrol/Glycidylmethacrylsäurecopolymerisat und/oder ein Styrol/(Meth)acrylsäure-t-butylestercopolymerisat. Die Hartkomponente C kann nach den herkömmlichen Methoden erhalten werden. So kann die Copolymerisation in Masse, Lösung oder wäßriger Emulsion durchgeführt werden. Die Hartkomponente hat vorzugsweise eine Viskositätszahl von 40 bis 100, insbesondere von 50 bis 85(ml/g), gemessen in DMF bei 25°C.

## Komponente E

Die erfindungsgemäßen Formmassen können gegenenfalls Ethylen-Copolymerisate, Komponente E, enthalten aus.

$e_1$ 40 bis 90 Gew.%, vorzugsweise 60 bis 95 Gew.% Ethylen

$e_2$ 9 bis 30 Gew.%, vorzugsweise 10 bis 25 Gew.% eines Carboxylderivat enthaltenden und

$e_3$ 1 bis 30 Gew.%, vorzugsweise 2 bis 15 Gew.% eines Carboxylgruppen enthaltenden Monomeren.

Als Comonomere $e_2$ werden beispielsweise verwendet Acrylsäure, Methacrylsäure, Fumarsäure, Maleinsäure-$C_1$-bis $C_8$-Alkylester oder Amide dieser Säuren. Bevorzugt wird das Butylacrylat. Als Comonomeren e3, werden beispielsweise Acrylsäure, Methacrylsäure, Fumarsäure, Maleinsäure(anhydrid) oder Salze dieser Säuren. Bevorzugt werden Maleinsäureanhydrid und/oder Acrylsäure und/oder Methacrylsäure angewendet.

Die bevorzugten Copolymeren besitzen eine Glasübergangstemperatur unterhalb von 0°C, insbesondere unter -20°C. Sie sind im allgemeinen hochmolekular und weisen einen Schmelzindex MFI 190/2, 16 = (DIN 53 735) von 1 und 80 auf.

Bezogen auf die Summe von A, B und C werden die Copolymeren (E) in einer Menge von 1 bis 40 Gew.%, vorzugsweise 5 bis 30 Gew.%, insbesondere 5 bis 20 Gew.% zugesetzt.

Die Herstellung der Copolymeren erfolgt in an sich bekannter Weise durch Polymerisation der Komponenten bei erhöhter Temperatur unter hohem Ethylendruck.

## Komponente F

Die erfindungsgemäßen Formmassen können zusätzlich noch mindestens ein lineares Blockpolymerisat der allgemeinen Formel

AB oder ABA

enthalten. Worin die Blöcke A aufgebaut sind aus mindestens einem mono-alkenyl-aromatischen Kohlenwasserstoff und der Block B aus einem copolymerisierbaren konjugierten Dien. Die Doppelbindungen im polaren Block B können zu 99 % hydriert sein, wobei das Verhältnis der Blöcke A zu B 1:9 bis 8:2 beträgt. Block A ewnthält bevorzugt Styrol, α-Methylstyrol, o-und/oder p-Methylstyrol und/oder p-t-Butylstyrol. Block B enthält bevorzugt Butadien und/oder Isopren auf ein gegebenenfalls 0 bis 25 Gew.%, bezogen auf F, Carboxylgruppen oder Carboxylgruppenderivate enthaltende Comonomere aufgepfropft sein können, wobei ebenfalls mindestens 95 % aller vorhandenen monoolefinischen Doppelbindungen hydriert und keine der von den vinylaromatischen Monomeren herrührenden Doppelbindungen hydriert sind. Die anionische Blockpolymerisation ist hinreichend bekannt (Houben-Weyl, Bd. 1_4), S. 793), sie erfolgt in der Regel in einem niedrig siedenden Kohlenwasserstoff, wie Cyclohexan. Als Initiatoren können gewöhnlich Organolithiumverbindungen, wie n-oder sec.-Butyllithium, eingesetzt werden.

## Komponente G

Die Formmassen gemäß der Erfindung können übliche Zusatzstoffe (Komponente G) enthalten. Unter Zusatzstoffen werden vorhadene Stabilisatoren, Oxidationsverzögerer, Mittel gegen Wärmezersetzung und Zersetzung durch ultraviolettes Licht, Gleit-und Entformungsmittel, Treibmittel, wie Farbstoffe und Pigmente, faser-und pulverförmige Verstärkungsmittel, Metallflocken oder metallbeschichtete Fasern zur Erhöhung der elektrischen Leitfähigkeit der Formmasse und Weichmacher.

Die Stabilisatoren können den Massen in jedem Stadium der Herstellung der thermoplastischen Massen zugesetzt werden. Vorzugsweise werden die Stabilisatoren zu einem früheren Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie z.B. Halogenide von Metallen der Gruppe I des Periodischen Systems, z.B. Natrium, Kalium, Lithium mit Kupfer-(I)-halogeniden, z.B. Chlorid, Bromid, Iodid, sterisch gehinderte Phenole, Hydrochinone, verschiedene substituierte Vertreter dieser Gruppen und Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf die Mischung, verwenden. Beispiele für UV-Stabilisatoren sind verschiedene substituierte Resorcine, Salicylate, Benzotriazole, Benzophenone und dergleichen.

Geeignete Gleit-und Entformungsmittel, die z.B. in Mengen bis 1,0 Gew.% der thermischen Masse zugesetzt werden, sind Stearinsäure, Stearinalkohol, Stearinsäureester und -amide. Ferner können zugesetzt werden: organische Farbstoffe, wie Nigrosin usw., Pigmente, z.B. Titandioxid, Cadmiumsulfid, Cadmiumsulfid-selenid, Phthalocyanine, Ultramarinblau, Ruß usw.; faser-und pulverförmige Füllstoffe und Verstärkungsmittel, wie Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer, Feldspat usw. in Mengen bis 50 Gew.% der Masse, Keimbildungsmittel, wie Talkum, Calciumfluorid, Natriumphenylphosphinat, Aluminiumoxid· und feinteiliges Polytetrafluorethylen usw., Weichmacher in Mengen bis etwa 20 Gew.% der Masse, z.B. Phthalsäuredioctylester, Phthal säuredibenzylester, Phthalsäurebutylbenzylester, Kohlenwasserstofföle, N-n-Butylbenzolsulfonamid, o-und p-Toluolethylsulfonamid usw. Die Färbemittel (Farbstoffe und Pigmente) können in Mengen bis zu etwa 0,5 Gew.%, bezogen auf die Formmasse aus A + D, zugesetzt werden.

Geeignete Metallflocken werden aus Aluminium, Kupfer, Silber oder Nickel oder Legierungen dieser Metalle hergestellt. Die zugesetzten Metallfasern bestehen aus Silber, Kupfer, Nickel, Aluminium oder Edelstahl. Die zugesetzten metallbeschichteten Glas-, Graphit-oder Aramidfasern können mit Nickel, Silber, Kupfer oder Aluminium beschichtet sein. Der Zusatz von 0 bis 40 Gew.%, bezogen auf A-F, oder bevorzugt von 25 bis 30 Gew.%, wobei das Verhältnis von Metallflocken zu Metallfasern oder metallbeschichteten Fasern im Bereich von 4:1 bis 14:1 eingestellt wird, bewirkt eine Leitfähigkeitssteigerung der Formmasse von ursprünglich $10^{-18}$ $Scm^{-1}$ auf >1 $Scm^{-1}$. Dadurch wird dieses Material für die Abschirmung von elektromagnetischen Wellen brauchbar.

Die Herstellung der erfindungsgemäßen Formmasse aus den Komponenten erfolgt in an sich bekannter Weise. Sie ist üblicherweise in einem geschlossenen System durch Schmelzmischen des Polyesters und des Polycarbonats mit den übrigen Komponenten zu einem gleichmäßigen Gemisch in einem Mehrfachschneckenextruder, wie einem Werner & Pfleiderer-Zweiwellenextruder oder anderen herkömmlichen Plastifizierungsvorrichtungen, wie einer Brabender-Mühle, einer Banbury-Mühle oder dgl. hergestellt. Die Gemische können aber auch durch gemeinsames Ausfällen aus Lösung oder durch Mischen oder Trockenmischen der Komponenten und anschließendes Schmelzstrangpressen des trockenen Gemisches hergestellt werden.

Die erfindungsgemäßen Formmassen sind für die Spritzgieß-und Extrusionsverarbeitung geeignet, zur Herstellung von hochbeanspruchbaren, thermostabilen, schlagzähen Formteilen für technische Zwecke aller Art.

Die in den Beispielen und Vergleichsversuchen beschriebenen Parameter wurden wie folgt bestimmt:

1. Die Kerbschlagzähigkeit, a $_k$, in ($kJ/m^2$) wurde nach DIN 53 453 bei einer Massetemperatur von 260°C an spritzgegossenen Normkleinstäben gemessen.

2. Die Viskositätszahlen, (VZ), $\eta$ sp/c in ml/g der Komponente D wurden bei 23°C in einer 0,5 %igen Lösung in Dimethylformamid gemessen. Alternativ wird auch der K-Wert angegeben.

3. Der Vicat-Erweichungspunkt in °C wurde nach DIN 53 450, Verfahren B in Silikonöl bestimmt.

Die Chemikalienbeständigkeit wird an gespritzten Rundscheiben der Formmassen geprüft (2 mm dick, ∅/50 mm). Dazu werden die gespritzten Rundscheiben 30 Minuten bei 50°C ± 2 % in einem Umlufttrockenschrank getrocknet. Danach werden 5 ml eines Festlösungsmittelgemisches, welches aus

85 Vol.% Treibstoffgemisch (DIN 53 521)
15 Vol.% Methanol

besteht, tropfenweise innerhalb 1 Minute auf die noch warme Platte appliziert. Diese Prozedur wird nach 24 Stunden wiederholt. Danach werden die Platten visuell beurteilt und entsprechend dem Angriff benotet.

|  | Chemikalienbeständigkeit |
|---|---|
| kein Angriff | gut |
| geringe Mattigkeit | befriedigend |
| matt | unbefriedigend |

Für die Herstellung erfindungsgemäßer Formmassen und von Vergleichsproben wurden die nachfolgend beschriebenen Produkte verwendet:

Komponente A

Ein Bisphenol-A-Polycarbonat mit der relativen Viskosität 1,36, gemessen in einer 0,5 %igen Lösung in Methylenchlorid bei 25°C.

Komponente B

Ein Polybutylenterephthalat mit der relativen Viskosität 1,60, gemessen in einer 0,5 %igen Lösung in einem Phenol/o-Dichlorbenzolgemisch von 3:2 Gewichtsteilen bei 25°C.

Komponente C

C₁ Ein im Handel erhältliches Pfropfmischpolymerisat auf Basis von Polybutadien (60 Gew.%) gepfropft mit Styrol und MMA (40 Gew.%) der Fa.Rohm & Haas bekannt als Paraloid® KM653.

$C_2$ Herstellung der Pfropfgrundlage $c_1$

16 Teile Butylacrylat und 0,4 Teile Allylacrylat wurden in 150 Teilen Wasser unter Zusatz von 0,5 Teilen des Natriumsalzes einer $C_{12}$-bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Dieser Latex wurde als Saat für die nachfolgende Polymerisation benutzt.

Zu einer Vorlage aus 2,5 Teilen des hergestellten Latex wurden nach Zugabe von 100 Teilen Wasser und 0,2 Teilen Kaliumpersulfat im Verlauf von 3 Stunden einerseits eine Mischung aus 98 Teilen Butylacrylat und 2 Teilen Allylacrylat und andererseits eine Lösung von 0,5 Teilen des Natriumsalzes einer $C_{12}$-bis $C_{18}$-Paraffinsulfonsäure in 50 teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 465 nm ermittelt. Die Teilchengrößenverteilung war eng (Q = 0,2).

Pfropfpolymerisation der Hüllen $c_{21}$ und $C_{23}$

125 Teile des erhaltenen Polybutylacrylat-Latices wurden mit einer Emulsion aus 5 Teilen Styrol, 60 Teilen Wasser, 0,02 Teilen Lauroylperoxid und 0,05 Teilen des Natriumsalzes einer $C_{12}$-$C_{18}$-Paraffinsulfonsäure versetzt und auf 65°C erhitzt. Nachdem das gesamte Styrol pfropfcopolymerisiert war, wurden 10 Teile einer Mischung Styrol-Acrylnitril im Gewichtsverhältnis von 80:20 hinzugefügt, parallel dazu fügte man eine Lösung von 0,02 Teilen Kalium hinzu. Nach der Polymerisation des Monomerengemisches werden 12 Teile Methylmethacrylat zugegeben. Das erhaltene Pfropfprodukt wird mit 0,5 %, bezogen auf den Pfropfkautschuk, 2,6-Di-tert.-butyl-4-methylphenol gegen oxidativen Angriff stabilisiert und anschließend mittels 60 %iger Schwefelsäure bei 95°C gefällt, mit wasser gründlich gewaschen und in warmen Luftstrom getrocknet.

$C_3$ Herstellung der Pfropfgrundlge $C_1$

Durch Polymerisation von 60 eilen Butadien in Gegenwart einer Lösung von 0,5 Teilen tert.-Dodecylmercaptan, 0,7 Teilen Natriumstearatt als Emulgator, 0,2 Teilen Kaliumperoxiddisulfat und 0,2 Teilen Natriumpyrophosphat in 80 Teilen Wasser wird bei 65°C ein Polybutadienlatex hergestellt. Nach Beendigung der Polymerisation wird der Polymerisationsautoklav entspannt.

Der Polymerisationsautoklav wird danach solange evakuiert bis der Restbutadiengehalt auf unter 100 ppmd (parts per million dispersion) absinkt. Es wurde ein Polybutadienlatex erhalten, dessen mittlere Teilchengröße bei 0,1 μm liegt. Dieser Latex wird durch Zusatz von 1,15 Teilen einer 10 %igen wäßrigen Essigsäureanhydridlösung agglomeriert, wobei ein Polybutadienlatex mit einer mittleren Teilchengröße von 0,5 bis 0,7 μm entstand.

Herstellung der Hüllen $C_{22}$ + $C_{23}$

140 Teile des erhaltenen Polybutadien-Latices wurden mit 20 Teilen einer Mischung aus Styrol und Acrylnitril (Verhältnis 70:30) und 50 Teilen Wasser gemischt und unter Rühren nach Zusatz von weiteren 0,08 Teilen Kaliumpersulfat und 0,05 Teilen Lauroylperoxid 3 Stunden auf 65°C erhitzt. Nach Beendigung der ersten Stufe der Pfropfpolymerisation wurde ohne weitere Zusatzstoffe 20 Teile Methylmethacrylat während 2 Stunden zugegeben. Die Temperatur betrug während des Zulaufs 65°C.

Nach Beendigung der Pfropfpolymerisation wurde das Produkt mittels 2,6-Di-tert.-butyl-methylphenol gegen Oxidationsprozesse stabilisiert und anschließend mittels 60 %iger Schwefelsäure bei 95°C gefällt, mit Wasser gründlich gewaschen und im warmen Luftstrom getrocknet.

$C_4$ nicht erfindungsgemäß

Durch Polymerisation von 60 Teilen Butadien in Gegenwart einer Lösung von 0,5 Teilen t-Dodecylmercaptan, 0,7 Teilen Natriumstearat als Emulgator, 0,2 Teilen Kaliumperoxiddisulfat und 0,2 Teilen Natriumpyrophosphat in 80 Teilen Wasser wird bei 65°C ein Polybutadienlatex hergestellt. Nach Beendigung der Polymerisation wird der Polymerisationsautoklav entspannt.

140 Teilen des erhaltenen Polybutadien-Latices wurden mit 40 Teilen einer Mischung aus Styrol und Acrylnitril (Verhältnis 70:30) und 50 Teilen Wasser gemischt und unter Rühren nach Zusatz von weiteren 0,08 Teilen Kaliumpersulfat und 0,05 Teilen Lauroylperoxid 3 Stunden auf 6,5°C erhitzt. Danach wurde das Produkt wie vorher beschrieben aufgearbeitet.

Komponente D

Ein Styrol-Acrylnitril-Copolymerisat mit einem Acrylnitrilanteil von 20 Gew.% und einer Viskositätszahl von 100 ml/g, gemessen analog DIN 53 726 in Dimethylformamid bei 23°C.

Komponente E

Der Schmelzindex, gemessen bei 190°C und 2,16 kg Gewicht des eingesetzten Ethylen-n-Butylacrylat-Acrylsäure-Copolymerisates beträgt 22 g/10 min und besitzt ein Monomerenverhältnis von 64:32:4.

Die in der Tabelle angegebenen Gewichtsteile der KomponentenA, B, C, D und eventuell E wurden in trockener Form innigst vermischt, auf einen Extruder bei 260°C aufgeschmolzen, geknetet und anschließend granuliert. Von dem Granulat wurden für die Prüfungen Prüfkörper bis 250°C gespritzt.

0 230 914

Die Zusammensetzung der Formmassen und ihre mechanischen Eigenschaften und anderen Eigenschaften sind in der folgenden Tabelle zusammengefaßt:

<u>Tabelle</u>

| Beispiel | Komp. A | Komp. B | Komp. C | | | | Komp. D | Komp. E | Kerbschlag-zähigkeit bei 23°C DIN .. .... | Vicat | Chemika-lienbe-ständigkeit |
| --- | --- | --- | --- | --- | --- | --- | --- | --- | --- | --- | --- |
| | | | $c_1$ | $c_2$ | $c_3$ | $c_4$ | | | | | |
| 1 | 54 | 6 | - | - | 20 | | 20 | - | 50 | 127 | gut |
| 2 | 48 | 12 | 22 | - | - | | 18 | - | 37 | 109 | gut |
| 3 | 48 | 12 | 22 | - | - | | 15 | 3 | 48 | 107 | befriedigend |
| 4 | 36 | 24 | - | 20 | - | | 20 | - | 30 | 110 | gut |
| 5 | 36 | 24 | - | - | 20 | | 15 | 5 | 49 | 114 | gut |
| 6 | 36 | 20 | - | - | 20 | | 20 | 4 | 44 | 106 | gut |
| 7 | 30 | 30 | 18 | - | - | 20 | 22 | - | 42 | 100 | befriedigend |

Vergl.-versuche

| Beispiel | Komp. A | Komp. B | $c_1$ | $c_2$ | $c_3$ | $c_4$ | Komp. D | Komp. E | Kerbschlag | Vicat | Chemikalien |
| --- | --- | --- | --- | --- | --- | --- | --- | --- | --- | --- | --- |
| I | 60 | - | 40 | - | - | | - | - | 40 | 100 | unbefriedigend |
| II | 40 | 20 | - | 40 | - | | - | - | 20 | 105 | " |
| III | 40 | 20 | - | - | 40 | | 40 | - | 10 | 104 | " |
| IV | 40 | 20 | | | | 20 | 20 | | 12 | 107 | befriedigend |

## Ansprüche

1. Schlagzähe thermoplastische Formmasse enthaltend, jeweils bezogen auf die Komponenten A, B, C + D,

A 25 bis 60 Gew.% mindestens eines Polycarbonates

B 5 bis 40 Gew.% mindestens eines Polyalkylenterephthalates und

C 2 bis 30 Gew.% mindestens eines Pfropfkautschuks

auf Basis von Polybutadien-oder Polyalkylacrylestern mit 1 bis 8 C-Atomen im Alkylrest oder Mischpolymerisaten davon als Elastomeren, dadurch gekennzeichnet, daß die Formmasse ferner als Komponente

D 5 bis 30 Gew.% mindestens eines Copolymeren aufweist,

das einpolymerisiert enthält, bezogen auf D,

$d_1$) 10 bis 90 Gew.% mindestens eines vinylaromatischen Monomeren aus der Gruppe von Styrol, $\alpha$-Methylstyrol oder p-Methylstyrol oder Gemischen davon

und

$d_2$) 90 bis 10 Gew.% mindestens eines ethylenisch ungesättigten Monomeren aus der Gruppe von (Meth)acrylsäure, (Meth)acrylsäurealkylestern mit 1 bis 8 C-Atomen im Alkylrest, (Meth)acrylnitril, Maleinsäureanhydrid, Maleinimid, N-Alkyl(Aryl)maleinimid oder Glycidylmethacrylat oder Gemischen davon.

2. Schlagzähe thermoplastische Formmasse bestehend aus den Komponenten A, B, C und D.

3. Schlagzähe thermoplastische Formmasse enthaltend, jeweils bezogen auf die Komponenten A, B, C + D,

A 30 bis 55 Gew.% mindestens eines Polycarbonates

B 5 bis 30 Gew.% mindestens eines Polyalkylenterephthalates und

C 5 bis 25 Gew.% mindestens eines Pfropfkautschuks

auf Basis von Polybutadien-oder Polyalkylacrylestern mit 1 bis 8 C-Atomen im Alkylrest oder Mischpolymerisaten davon als Elastomeren, dadurch gekennzeichnet, daß die Formmasse ferner als Komponente

D 10 bis 25 Gew.% mindestens eines Copolymeren aufweist,

das einpolymerisiert enthält, bezogen auf D,

$d_1$) 10 bis 90 Gew.% mindestens eines vinylaromatischen Monomeren aus der Gruppe von Styrol, $\alpha$-Methylstyrol oder p-Methylstyrol oder Gemischen davon

und

$d_2$) 90 bis 10 Gew.% mindestens eines ethylenisch ungesättigten Monomeren aus der Gruppe von -(Meth)acrylsäure, (Meth)acrylsäurealkylestern mit 1 bis 8 C-Atomen im Alkylrest, (Meth)acrylnitril, Maleinsäureanhydrid, Maleinimid, N-Alkyl(Aryl)maleinimid oder Glycidylmethacrylat oder Gemischen davon.

4. Schlagzähe Formmasse gemäß Anspruch 1, dadurch gekennzeichnet, daß sie jeweils bezogen auf 100 Gew.-Teile der Formmasse aus A, B, C + D zusätzlich aufweist

0 bis 30 Gew.-Teile eines Ethylencopolymeren (Komponente E)

0 bis 20 Gew.-Teile eines Blockcopolymerisates (Komponente F)

0 bis 40 Gew.-Teile üblicher Zusatzstoffe (Komponente G).

5. Schlagzähe thermoplastische Formmasse enthaltend, jeweils bezogen auf die Komponenten A, B, C + D,

A 30 bis 55 Gew.% mindestens eines Polycarbonates auf Basis von Bisphenol A,

B 5 bis 30 Gew.% Polybutylenterephthalat und

C 5 bis 25 Gew.% mindestens eines Pfropfkautschuks

auf Basis von Polybutadien-oder Polyalkylacrylestern mit 1 bis 8 C-Atomen im Alkylrest oder Mischpolymerisaten davon als Elastomeren, dadurch gekennzeichnet, daß die Formmasse ferner als Komponente

D 5 bis 30 Gew.% mindestens eines Copolymeren aufweist,

das einpolymerisiert enthält, bezogen auf D,

$d_1$) 65 bis 90 Gew.% mindestens eines vinylaromatischen Monomeren aus der Gruppe von Styrol, $\alpha$-Methylstyrol oder p-Methylstyrol oder Gemischen davon

und

$d_2$) 35 bis 20 Gew.% Acrylnitril.

6. Formmasse nach Anspruch 5, dadurch gekennzeichnet, daß sie zusätzlich 2 bis 20 Gew.% eines Ethylen-n-Butylacrylat-Acrylsäure-Terpolymerisates aufweist.

11

7. Verwendung der Formmasse gemäß Anspruch 1 zur Herstellung von Formteilen.

8. Formteile aus Formmassen gemäß Anspruch 1.